# EUROPÄISCHE PATENTSCHRIFT

(11) **EP 1 597 466 B1**
(45) Veröffentlichungstag und Bekanntmachung des Hinweises auf die Patenterteilung: **15.10.2008**
(21) Anmeldenummer: 04701603.5
(22) Anmeldetag: 13.01.2004
(51) Int. Cl.: F02D 9/02, F02D 9/10, F02D 41/10

(54) **DIREKTEINSPRITZENDE BRENNKRAFTMASCHINE UND VERFAHREN ZU DEREN BETRIEB**
DIRECT INJECTING INTERNAL COMBUSTION ENGINE AND METHOD FOR THE OPERATION THEREOF
MOTEUR A COMBUSTION INTERNE A INJECTION DIRECTE ET PROCEDE DE FONCTIONNEMENT DUDIT MOTEUR

(30) Priorität: 15.02.2003 DE 10306411
(43) Veröffentlichungstag der Anmeldung: 23.11.2005
(73) Patentinhaber: Volkswagen Aktiengesellschaft, 38436 Wolfsburg (DE)
(72) Erfinder: BIENER, Martin, 38173 Veltheim (DE)
(86) Internationale Anmeldenummer: PCT/EP2004/000155
(87) Internationale Veröffentlichungsnummer: WO 2004/072457

(56) Entgegenhaltungen:
- DE-A- 10 151 305
- DE-A- 19 809 009
- FR-A- 2 605 049
- US-A- 4 354 464
- US-A- 4 519 369
- US-A1- 2002 145 053
- US-B1- 6 231 478

## Beschreibung

Die Erfindung betrifft ein Verfahren zum Betreiben einer direkteinspritzenden Brennkraftmaschine, insbesondere eines Dieselmotors, insbesondere eines Kraftfahrzeuges, mit einer im Saugrohr angeordneten Drosselklappe, wobei in einem Leerlaufzustand der Brennkraftmaschine die Drosselklappe vollständig geschlossen wird und eine der Brennkraftmaschine zugeführte Luftmenge an der Drosselklappe vorbei über einen bzgl. des Saugrohres externen Bypass mittels einer von der Drosselklappe unabhängigen Regeleinrichtung geregelt wird, gemäß dem Oberbegriff des Anspruchs 1.

Aus der DE 36 41 273 A1 ist eine Saugrohranordnung für eine Dieselmaschine bekannt, wobei eine von einem Maschinenparameter verstellbare Drossel zur Verringerung des Ungleichförmigkeitsgrades der Maschine im Leerlast- oder Teillastbereich vorgesehen ist. Zusätzlich ist ein Bypass zur Drossel vorgesehen, dessen Strömungsquerschnitt zwecks Sicherstellung des zur einwandfreien Verbrennung im Leerlast- oder Teillastbetrieb erforderlichen Luftüberschusses mit zunehmender Drosselwirkung der Drossel zumindest konstant bleibt, vorzugsweise zunimmt. Bei im Leerlauf angedrosselten Zustand der Brennkraftmaschine sinkt jedoch bei Turbomotoren eine Drehzahl des Abgasturboladers (ATL) und damit das zum Anfahren zur Verfügung stehende Moment. Zusätzlich erfordert eine geregelte Androsselung im Leerlauf eine hochpräzise Erfassung sowie Regelung der Drosselklappenposition.

Ein gattungsgemäßes Verfahren ist aus der US 4 354 464 bekannt. Ein bzgl. des Saugrohres externer Bypasskanal enthält ein Magnetventil, welches wahlweise in die Zustände "Offen" oder "Geschlossen" umschaltbar ist. Die Grundstellung ist hierbei der Zustand "Geschlossen". Das Magnetventil wird lediglich dann geöffnet, wenn eine Motorbremse aktiv ist, sich die Brennkraftmaschine in einer Aufwärmphase befindet oder während des Startvorganges der Brennkraftmaschine. Wahlweise ist das Magnetventil durch einen temperaturgesteuerten Schieber ersetzt, welche in Abhängigkeit von einer Wassertemperatur den Bypasskanal stufenlos öffnet oder schließt.

Aus der FR 2 605 049 A1 ist ein Saugrohr für einen Dieselmotor bekannt, welches einen Bypasskanal aufweist, der eine Drosselklappe in dem Saugrohr überbrückt. In einem Leerlaufzustand des Dieselmotors wird die Drosselklappe in dem Saugrohr geschlossen und ein Ventil in dem Bypasskanal geöffnet. Der Öffnungsgrad des Ventils in dem Bypasskanal wird von einem Rechner in Abhängigkeit einer Temperatur des Motorkühlwassers berechnet.

Aus der DE 198 09 009 A1 ist eine Zwischenzylindereinspritzungs-Treibstoffsteuerung für einen Verbrennungsmotor bekannt. Ein Saugrohr weist einen Umgehungskanal mit einem Luftumgehungsventil auf, der ein Drosselventil in dem Saugrohr überbrückt. Im Leerlaufbetrieb wird das Drosselventil vollständig geschlossen und das Drehmoment mittels des Luftumgehungsventils auf die Laufgeschwindigkeit des Motors im Leerlauf gesteuert.

Der Erfindung liegt die Aufgabe zugrunde, ein Verfahren der obengenannten Art zur Verfügung zu stellen, wobei die Regelung für die Androsselung im Leerlauf vereinfacht und für den Fahrer bemerkbare Anfahrschwächen vermieden sind.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es bei einem Verfahren der o.g. Art erfindungsgemäß vorgesehen, dass während der Regelung der Luftzuführung über den Bypass eine Bewegung eines Kupplungspedals überwacht und in Abhängigkeit von der Bewegung des Kupplungspedals die Androsselung über den Bypass aufgehoben wird, wobei aus der Bewegung des Kupplungspedals eine Voraussage für einen Einkuppelzeitpunkt bestimmt und in Abhängigkeit von diesem Zeitpunkt die Androsselung der Brennkraftmaschine über den Bypass aufgehoben wird, und dass während der Regelung der Luftzuführung über den Bypass eine Stellung und/oder Bewegung eines Gaspedals überwacht und in Abhängigkeit von der Stellung und/oder Bewegung eines Gaspedals die Androsselung über den Bypass aufgehoben wird, wobei aus der Stellung und/oder Bewegung des Gaspedals eine Voraussage für ein gewünschtes Anfahrmoment bestimmt und in Abhängigkeit von diesem Anfahrmoment die Androsselung der Brennkraftmaschine über den Bypass aufgehoben wird.

Dies hat den Vorteil, dass die Regelung der Androsselung der Brennkraftmaschine bzw. Luftzuführung zur Brennkraftmaschine im Leerlauf vereinfacht ist, da nicht eine Drosselklappenstellung hochpräzise abgetastet und eingestellt werden muss. Es wird rechtzeitig ein Betriebszustand der Brennkraftmaschine erkannt, bei dem die Brennkraftmaschine ein gewünschtes Drehmoment abgeben soll, beispielsweise zum Anfahren nach einem Leerlaufzustand. Der Zustand "Anfahren" während der Regelung der Luftzuführung über den Bypasskanal wird erkannt.

Beispielsweise wird die von der Drosselklappe unabhängige Regelung mittels eines Umluftventils durchgeführt.

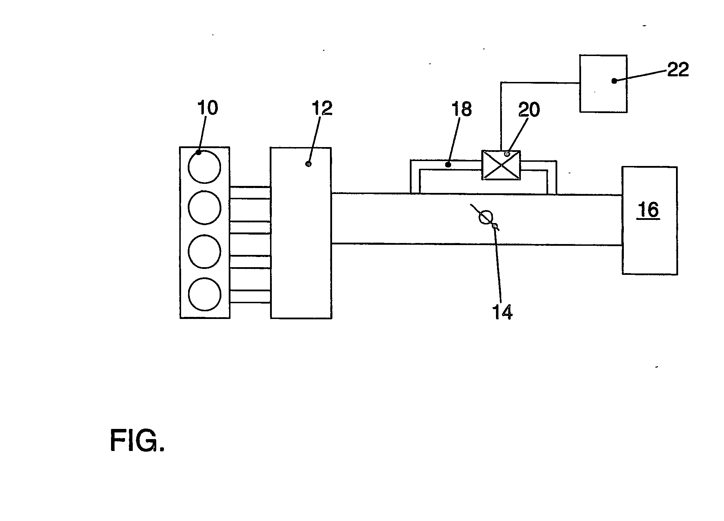

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigt in der einzigen Fig. ein schematisches Blockdiagramm einer Brennkraftmaschine.

Die aus der einzigen Fig. ersichtliche, bevorzugte Ausführungsform einer Brennkraftmaschine zur Ausführung des erfindungsgemäßen Verfahrens, welche beispielsweise ein Dieselmotor für ein nicht näher dargestelltes Kraftfahrzeug ist, umfasst einen Motorblock 10, ein Saugrohr 12, eine im Saugrohr 12 angeordnete Drosselklappe 14 und ein dem Saugrohr 12 vorgeschaltetes Luftfilter 16. Zusätzlich ist ein die Drosselklappe 14 überbrückender Bypasskanal 18 vorgesehen. In diesem Bypasskanal 18 ist ein regelbares Umluftventil 20 vorgesehen, welches von einem Steuergerät 22 angesteuert wird.

In einem Leerlaufzustand der Brennkraftmaschine wird die Drosselklappe 14 vollständig geschlossen und die Luftzufuhr über das Saugrohr 12 an den Motorblock 10 über den Bypasskanal 18 mittels des Umluftventils 20 derart gesteuert, dass die Brennkraftmaschine angedrosselt wird. Hierbei wird die Luftzufuhr im Leerlauf der Brennkraftmaschine so weit gedrosselt, dass die Gaskräfte, welche Auslöser für starke Ungleichförmigkeiten beispielsweise bei einem Dieselmotor im Leerlauf sind, stark reduziert werden. Der Motor läuft spürbar weicher, das Verbrennungsgeräusch sowie das Ansauggeräusch aus einem Luftfilterkasten werden erheblich gemindert. Die Maßnahme kommt einer Verdichtungssenkung gleich. Durch das geänderte Lambda-Verhältnis ist zudem eine andere Parametrierung der Einspritz- und Leerlaufdrehzahlwerte möglich, als bei "normaler", d.h. ungedrosselter, Luftzufuhr. Dies verbessert zusätzlich die Leerlaufqualität der Brennkraftmaschine. Somit bringt es erhebliche Vorteile, wenn im Leerlauf die Luftzufuhr bei warmen Motor soweit gedrosselt wird, dass die Gaskräfte reduziert werden, da der Motor erheblich ruhiger läuft. Das für Dieselmotoren typische und unerwünschte Leerlaufschütteln ist weitgehend eliminiert und die Leerlaufakustik verbessert, d.h. das dieseltypische "Nageln", vermieden.

Mittels des Umluftventils 20 erfolgt die Androsselung bei vollständig geschlossener Drosselklappe vereinfacht und ohne die Notwendigkeit einer hochpräzisen Erfassung und Regelung einer Stellung der Drosselklappe.

Sofern die Brennkraftmaschine mit einem Abgasturbolader (ATL) ausgerüstet ist, sinkt die ATL-Drehzahl und damit das zum Anfahren zur Verfügung stehende Moment. Über eine entsprechende Regelung erfolgt eine zuverlässige Erkennung, ob ein Anfahrvorgang des Kraftfahrzeugs unmittelbar bevorsteht. In diesem Fall wird die Brennkraftmaschine umgehend "entdrosselt". Eine Erkennung des Zustandes "Anfahren" über Fahrzeuggeschwindigkeit oder Kupplungspedalstellung ist hierfür nicht ausreichend, da sie zu einem zu späten Zeitpunkt greift. Erfindungsgemäß ist stattdessen ein Kupplungspedalgeber vorgesehen, der eine Voraussage des Einkuppelzeitpunktes sowie über das gewünschte Anfahrmoment anhand des Gradienten des Kupplungsweges ermöglicht. Es kann dann durch das Motorsteuergerät 22 ein frühzeitige Entdrosselung erfolgen, ohne Komfortverlust im Leerlauf, d.h. die Entdrosselung wird nicht schon beim Treten der Kupplung ausgeführt, und ohne Anfahrschwäche, d.h. die Entdrosselung erfolgt nicht erst beim Anrollen des Kraftfahrzeuges oder bei erkanntem Kupplungspedalschalter. In analoger Weise kann auch ein Gaspedalgeber vorgesehen sein.

## Patentansprüche

1. Verfahren zum Betreiben einer direkteinspritzenden Brennkraftmaschine, insbesondere eines Dieselmotors, insbesondere eines Kraftfahrzeuges, mit einer im Saugrohr angeordneten Drosselklappe, wobei in einem Leerlaufzustand der Brennkraftmaschine die Drosselklappe vollständig geschlossen wird und eine der Brennkraftmaschine zugeführte Luftmenge an der Drosselklappe vorbei über einen bzgl. des Saugrohres externen Bypass mittels einer von der Drosselklappe unabhängigen Regeleinrichtung geregelt wird, **dadurch gekennzeichnet, dass** während der Regelung der Luftzuführung über den Bypass eine Bewegung eines Kupplungspedals überwacht und in Abhängigkeit von der Bewegung des Kupplungspedals die Androsselung über den Bypass aufgehoben wird, wobei aus der Bewegung des Kupplungspedals eine Voraussage für einen Einkuppelzeitpunkt bestimmt und in Abhängigkeit von diesem Zeitpunkt die Androsselung der Brennkraftmaschine über den Bypass aufgehoben wird, und dass während der Regelung der Luftzuführung über den Bypass eine Stellung und/oder Bewegung eines Gaspedals überwacht und in Abhängigkeit von der Stellung und/oder Bewegung eines Gaspedals die Androsselung über den Bypass aufgehoben wird, wobei aus der Stellung und/oder Bewegung des Gaspedals eine Voraussage für ein gewünschtes Anfahrmoment bestimmt und in Abhängigkeit von diesem Anfahrmoment die Androsselung der Brennkraftmaschine über den Bypass aufgehoben wird.

2. Verfahren nach Anspruch 1, **dadurch gekennzeichnet, dass** die von der Drosselklappe unabhängige Regelung mittels eines Umluftventils durchgeführt wird.

## Claims

1. Method for operating a direct-injection internal combustion engine, in particular a diesel engine, in particular of a motor vehicle, having a throttle flap which is arranged in the intake pipe, wherein in an idle state of the internal combustion engine, the throttle flap is completely closed and an air quantity which is supplied to the internal combustion engine is regulated, past the throttle flap via a bypass which is external with respect to the intake pipe, by means of a regulating device which is independent of the throttle flap, **characterized in that**, during the regulation of the air supply via the bypass, a movement of a clutch pedal is monitored, and the throttling via the bypass is eliminated as a function of the movement of the clutch pedal, with a prediction for an engagement time being determined from the movement of the clutch pedal, and with the throttling of the internal combustion engine via the bypass being eliminated as a function of said time,
and **in that**, during the regulation of the air supply via the bypass, a position and/or movement of a throttle pedal is monitored and the throttling via the bypass is eliminated as a function of the position and/or movement of the throttle pedal, with a prediction for a desired starting torque being determined from the position and/or movement of the throttle pedal, and with the throttling of the internal combustion engine via the bypass being eliminated as a function of said starting torque.

2. Method according to Claim 1, **characterized in that** the regulation which is independent of the throttle flap is carried out by means of a recirculation valve.

## Revendications

1. Procédé pour faire fonctionner un moteur à combustion interne à injection directe, en particulier un moteur diesel, en particulier d'un véhicule automobile, comprenant un papillon disposé dans la tubulure d'admission, le papillon étant complètement fermé dans un état de marche à vide du moteur à combustion interne, et une quantité d'air acheminée au moteur à combustion interne étant réglée pour passer devant le papillon par le biais d'une dérivation externe par rapport à la tubulure d'admission, au moyen d'un dispositif de réglage indépendant du papillon, **caractérisé en ce que** pendant le réglage de l'alimentation en air par le biais de la dérivation, un mouvement de la pédale d'embrayage est surveillé et en fonction du mouvement de la pédale d'embrayage, l'étranglement est supprimé par le biais de la dérivation, une prévision d'un instant d'embrayage étant déterminée à partir du mouvement de la pédale d'embrayage et en fonction de cet instant, l'étranglement du moteur à combustion interne étant supprimé par le biais de la dérivation, et **en ce que** pendant la régulation de l'alimentation en air par le biais de la dérivation, une position et/ou un mouvement d'une pédale d'accélérateur sont surveillé et en fonction de la position et/ou du mouvement d'une pédale d'accélérateur et l'étranglement est supprimé par le biais de la dérivation, une prévision d'un couple de démarrage souhaité étant déterminée à partir de la position et/ou du mouvement de la pédale d'accélération et en fonction de ce couple de démarrage, l'étranglement du moteur à combustion interne étant supprimé par le biais de la dérivation.

2. Procédé selon la revendication 1, **caractérisé en ce que** la régulation indépendante du papillon s'effectue au moyen d'une soupape de recirculation d'air.
